Europäisches Patentamt

European Patent Office

Office européen des brevets

(19)

(11) Veröffentlichungsnummer: **0 474 324 A1**

## (12) EUROPÄISCHE PATENTANMELDUNG

(21) Anmeldenummer: **91250235.8**

(22) Anmeldetag: **27.08.91**

(51) Int. Cl.5: **A01M 17/00**

(30) Priorität: **27.08.90 IT 250890**

(43) Veröffentlichungstag der Anmeldung:
**11.03.92 Patentblatt 92/11**

(84) Benannte Vertragsstaaten:
**AT BE CH DE DK ES FR GB GR IT LI LU NL SE**

(71) Anmelder: **S.A.V.A. SOCIETA PER LE APPLICAZIONI DEL VUOTO ATMOSFERICO**
**Via 1. Maggio, 11**

**I-32030 Arsie'(Belluno)(IT)**

(72) Erfinder: **Dall'Agnol, Dario**
**11, Via I. Maggio**
**I-32030 Arsie' (Belluno)(IT)**

(74) Vertreter: **Wablat, Wolfgang, Dr.Dr.**
**Potsdamer Chaussee 48**
**W-1000 Berlin 38(DE)**

(54) **Verfahren und Anlage zur Beseitigung von tierischen Schädlingen pflanzlicher Stoffe.**

(57) Das Verfahren zur Befreiung (Entseuchung) pflanzlicher oder anderer Stoffe von tierischen Schädlingen mittels Einfüllen in einen Vakuumbehälter (B) besteht darin, daß die zu behandelnden Produkte in einen luftdichten Hauptbehälter (B) eingefüllt werden, wo mittels einer Vakuumpumpe (A) und eines Nebenbehälters (C) eine schnelle Dekompression entsprechend dem Dekompressionswert der Spannung von gesättigtem Wasserdampf bei Umwelttemperatur entsteht und ein kritisches Spannungsfeld für die biologischen Strukturen erzeugt wird. Da die pflanzlichen Organe in Bezug auf die tierischen Schädlinge einen höheren Widerstandsgrad zeigen, werden Vorgänge von Embolien durch die Entwicklung von Gas in den organischen Zellflüssigkeiten der betroffenen Schädlinge eingeleitet und vervollständigt. Das Verfahren eignet sich auch für eine bessere Verteilung üblicher Insektizide oder für eine kombinierte Anwendung von Embolie- und Insektizidverfahren.

Die Erfindung umfaßt auch eine Anlage zur Durchführung des Verfahrens.

Fig.1

EP 0 474 324 A1

Die Erfindung betrifft ein Verfahren zur Beseitigung von tierischen Schädlingen pflanzlicher Stoffe und eine Anlage zur Durchführung dieses Verfahrens.

Es ist bekannt, die Befreiung der Vegetabilien von tierischen Schädlingen mit dem Einsatz von Insektiziden, welche mit den angepeilten Parasiten in Kontakt gebracht werden müssen, vorzunehmen. Dabei werden je nach den Eigenschaften der Pflanzengattungen und ihrer Anbauart verschiedene Methoden und Techniken angewendet. Im freien Feld bedient man sich der Zerstäubung von Insektiziden mittels der herkömmlichen Vernebelung und einem großen Aufwand an flüssigen Insektiziden, wodurch oft Umweltschäden verursacht werden.

Bei Gewächshaus-Kulturen oder für die Behandlungen von Saatgut oder von Zimmerpflanzen werden die Räume mit vernebelten flüssigen Insektiziden gesättigt oder es werden gasförmige Insektizide eingeführt.

Mit der derzeitigen Methode versucht man in jedem Falle die angepeilten Schädlinge mit einem für den gegebenen Fall am geeignetsten Insektizid zu treffen, was jedoch folgende Nachteile mit sicht bringt:

- die Notwendigkeit, die Behandlung öfters zu wiederholen, jedesmal für eine andere Schädlingsart;
- die Möglichkeit, daß die Parasiten natürliche biologische Abwehrmittel entwickeln;
- die Tatsache, daß die zerstäubten oder sonstwie in die Umwelt ausgestoßenen Insektizide nicht alle Teile der Pflanzen erreichen, auch wenn sie ganz fein vernebelt werden. Aus diesem Grunde ist die Entseuchung nie vollständig, weil die systematische Anwendung von aktiven Substanzen bekanntlich gefährlich ist, da sie von Früchten, Samen usw. absorbiert werden und so die Gefahr besteht, daß sie beim Verbrauch Restgifte enthalten;
- der Ausstoß in die Umwelt von giftigen Produkten, welche sich darin und in der Nahrungskette anhäufen;
- die Entwicklung von biologischen Widerstandsmechanismen durch die Gewöhnung der angepeilten Parasiten an die jeweils angewandten aktiven Substanzen.

Es ist daher Aufgabe der Erfindung, ein Verfahren für die Entseuchung von pflanzlichen Substanzen nicht im offenen Feld, sondern in geschlossenen Bereichen anzugeben. Damit wird jede Art von Umweltverschmutzung ausgeschaltet, indem keine Insektizide angewendet oder in jedem Falle nicht an die Umwelt abgegeben werden, was die Umwelt und auch die Nahrungskette schont.

Dabei besteht die Möglichkeit, alle tierischen Schädlinge zu treffen, und zwar mit einem Verfahren, bei dem sie keine natürlichen Abwehrmittel und keine biologischen Widerstandsmechanismen durch Gewöhnung an den aktiven Stoff der Insektizide entwickeln können und das zudem noch die Garantie bietet, daß die gesamte Oberfläche des zu behandelnden pflanzlichen Gutes erreicht wird.

Zur Lösung der geschilderten Aufgabe wird erfindungsgemäß ein Verfahren zur Befreiung (Entseuchung) pflanzlicher oder anderer Stoffe von tierischen Schädlingen vorgeschlagen, bei dem die zu behandelnden Produkte in einen Vakuumbehälter eingefüllt werden und entsprechend dem Dekompressionswert der Spannung von gesättigtem Wasserdampf bei Umwelttemperatur eine schnelle Dekompression erzeugt wird, wodurch für die biologischen Strukturen ein kritisches Spannungsfeld entsteht und infolge des höheren Widerstandsgrades der pflanzlichen Organe gegenüber denen der tierischen Vorgänge eingeleitet und vervollständigt werden, die in den Schädlingen durch die Entwicklung von in den organischen Zellflüssigkeiten aufgelösten Gasen Embolien entstehen lassen.

Grundsätzlich kann die vorliegende Erfindung für alle physisch in einem Vakuumbehälter entsprechender Größe einfüllbaren Früchte, Saatgüter, Pflanzen und deren Teile angewandt werden, wobei die Entseuchung der Vegetabilien von den tierischen Schädlingen, egal in welchem Entwicklungsstadium sie sich auch befinden, ermöglicht wird.

Die Erfindung beruht auf der Überlegung, daß das kritische Spannungsfeld der biologischen Strukturen durch die Spannung des gesättigten Wasserdampfes bei Umwelttemperatur bestimmt wird (bekanntlich schwankt diese Spannung zwischen 6,13 mbar und 40,72 mbar bei Temperaturen zwischen 0° C und 30° C), wobei man dem Umstand Rechnung trägt, daß es im Widerstand der pflanzlichen zu den tierischen Organismen Unterschiede gibt.

Vorteilhafte Weiterbildungen und Ausgestaltungen sind in den Unteransprüchen angegeben.

Nachstehend wird die Erfindung anhand eines in der Zeichnung dargestellten Ausführungsbeispieles einer Anlage zur Durchführung des vorgeschlagenen Verfahrens näher erläutert. Es zeigen:

Fig. 1      eine schematisch angegebene Anlage zur Durchführung des Verfahrens;

Fig. 2      eine Variante zu Fig. 1.

Die wesentlichen Teile der Grundausrüstung der Anlage sind eine Vakuumpumpe (A) ein Vakuumhauptbehälter (B) und eine Nebenkammer (c).

Die Vakuumpumpe A, mit einer angegebenen besten Endleistung von 1 mbar, ist mit dem Hauptbehälter B durch eine mit einem Ventil 2 versehenen Leitung 1 verbunden. Gleichermaßen ist sie mit der Nebenkammer C durch die mit einem Ventil 4 ausgerüstete Leitung 3 verbunden.

Auch der Hauptbehälter B ist durch eine mit Ventil 6 ausgestattete Leitung 5 mit der Nebenkammer C verbunden. Beide Behälter B und C sind mit Ablaßventilen 7 und 8 ausgerüstet und haben zur Kontrolle des Unterdruckes Vakuummeter 9 und 10.

Der Vakuumhauptbehälter B kann je nach Bedarf beliebige Größen und Formen aufweisen. Er ist außerdem mit einer luftdichten Tür B1 versehen, um das Einfüllen und Ausladen der zu behandelnden pflanzlichen Güter zu ermöglichen.

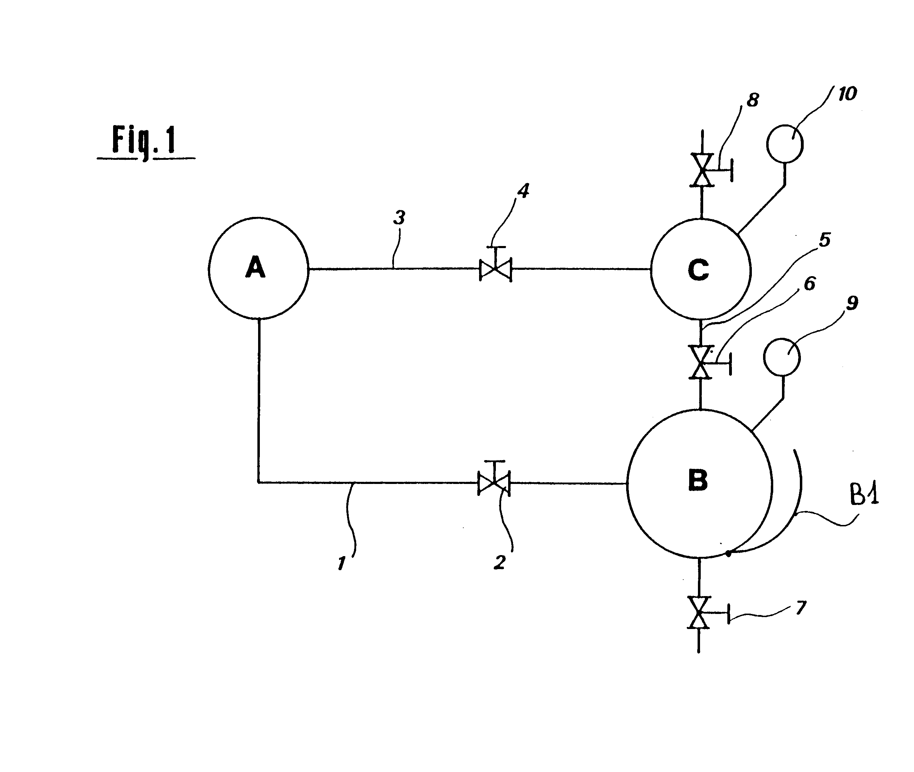

Unter Bezugnahme auf die Fig. 1 erfolgt ein Entseuchungsvorgang nach dem vorgeschlagenen Verfahren wie folgt:

- Phase 1: Die Vakuumpumpe A wird in Betrieb gesetzt, wobei das Ventil 4 offen, die Ventile 2 und 6 sowie 7 und 8 geschlossen sind, welche letztere nur der Entleerung dienen. Über die Leitung 3 wird in der Nebenkammer C der gewünschte Unterdruck erzeugt. Ist der Unterdruck von indikativ 1 mbar erreicht, was auf dem Vakuummeter 10 abzulesen ist, wird das Ventil 4 geschlossen und die Vakuumpumpe abgestellt.

- Phase 2: Die luftdichte Tür B1 des Hauptbehälters B wird geöffnet, das zu behandelnde Gut eingefüllt und die luftdichte Tür B1 wieder geschlossen. Die Reihenfolge dieser Phasen und Vorgänge ist willkürlich, so daß sie zur Zeitersparnis auch miteinander ausgeführt werden können.

- Phase 3: Das Ventil 6 wird geöffnet, was über die Leitung 5 im Hauptbehälter eine blitzschnelle Dekompression bewirkt. Wie bereits gesagt, ruft die schnelle Dekompression in den Schädlingen der Pflanzen, die im Behandlungsbehälter B eingeschlossen sind, das Auftreten von Embolien hervor. Die Wirksamkeit dieser Phase hängt ab vom Verhältnis des Volumens der Nebenkammer C zum freigebliebenen Volumen der Hauptkammer B, nachdem das zu behandelnde Produkt eingeführt worden ist.

Um den höchsten Wirkungsgrad dieser Phase zu erreichen, d. h. um im Hauptbehälter B fast schlagartig einen der Spannung des gesättigten Wasserdampfes nahen Unterdruck zu erzeugen (der bei 20° C etwa 23 mbar beträgt), muß das Volumenverhältnis ungefähr 45:1 ausgelegt werden. Dies gemäß dem Boyle'schen Gesetz: $P^*V = K$. Dieses Verhältnis ist leicht zu erreichen, wenn die Hauptkammer B voll aufgefüllt ist und wenn es sich um geringe Mengen kleiner Samen oder Mehle handelt. Immerhin ist es für alle Produkte, die ihrer Form wegen einen höheren Vakuumwert erreichen (sei es auch nur mit dem Auffüllen mit Inertmaterial) theoretisch quantifizierbar und leicht zu erreichen.

Um in der Phase 3 mit einer Anlage, welche für die Behandlung verschiedener Produkte geeignet ist, einen guten Wirkungsgrad zu erreichen, ist es von Vorteil, eine entsprechende Überdimensionierung der Nebenkammer C oder eine höhere Betriebstemperatur vorzusehen, weil sich das Volumenverhältnis bei einem höheren Druck des gesättigten Wasserdampfes verbessert. Man kann auch eine geringere Wirkung der Phase 3 in Kauf nehmen, wenn dieser Nachteil durch eine längere Zeitdauer der nachfolgenden Phase 4 ausgeglichen wird.

- Phase 4: Nachdem der Druck in den beiden Behältern B und C ausgeglichen ist, wird das Ventil 6 geschlossen und das Ventil 2 geöffnet. Die Vakuumpumpe wird erneut in Betrieb gesetzt, um über die Leitung 1 einen weiteren Druckabfall im Behälter B zu erzeugen. Der gewünschte Endwert kann am Vakuummeter 9 abgelesen werden. In dieser Phase sinkt der Druck im Behälter B bis zum Spannungswert des gesättigten Wasserdampfes (falls dies nicht schon in der Phase 3 erreicht wurde), und zwar auf Grund der bekannten Tabelle der Spannungswerte des gesättigten Wasserdampfes. Dabei muß man dem Umstand Rechnung tragen, daß es leichte Abweichungen von dieser Tabelle geben kann, da die Dämpfe nicht genau dem Boyle'schen Gesetz folgen und es eine gewisse Zeit braucht, um das thermische Gleichgewicht in den von der plötzlichen Abkühlung betroffenen Gasen wieder herzustellen, die sich wegen der ebullioskopischen Steigerung durch die schnelle, praktisch adiabatische Ausdehnung ergibt, da man mit organischen Flüssigkeiten arbeitet.

Nachdem ein der Spannung des gesättigten Dampfes entsprechender Druck erreicht ist, gleicht die Verdampfung des Wassers die Pumpenleistung aus und der Druck wird sich während der Dehydrierung der im Behälter B enthaltenen Produkte ziemlich genau erhalten oder aber leicht abfallen. In dieser vierten Phase erfolgt die eigentliche Entseuchung mit den zu Ende gebrachten, in der dritten Phase schnell erzeugten Embolien und mit dem Tode der mit dieser Behandlung angepeilten Schädlinge, jedoch ohne unwiederbringbare Schäden an den pflanzlichen Zellen zu verursachen, falls die Standzeit im Niederdruck genügend kurz bemessen wurde. Diese Zeit in der vierten Phase ist von zwei Umständen abhängig, nämlich von dem in der dritten Phase erreichten Wirkungsgrad und von der Eigentümlichkeit der zu behandelnden Schädlinge, d. h. von der Insektenart und ihrem entomologischen Entwicklungsstadium. Im Verhältnis zu den zu behandelnden Produkten und ihrem nachfolgenden Einsatz (z. B. Saatgut, wo man Schäden an den Keimzellen verhüten muß, oder Produkten, die für den Verbrauch bestimmt sind und bei welchen keine besondere Vorsicht notwendig ist) ist die Behandlungszeit nämlich begrenzt.

- Phase 5: Ist die Standzeit im Niederdruck beendet, so wird das Ventil 2 geschlossen, die Vakuumpumpe abgestellt und das Ventil 7 geöffnet. Damit wird im Hauptbehälter der Umweltdruck wieder hergestellt. Nun kann man die Tür B1 öffnen und das behandelte Gut herausnehmen. Die fünfte Phase schließt die Behandlungsfolge mit der in Fig. 1 schematisch dargestellten Anlage ab, die nun für eine neue Behandlungsfolge bereit steht.

Auf diese Art erfolgt eine Entseuchung der Vegetabilien von tierischen Schädlingen ohne Einsatz von phytosanitarischen (insektiziden) Mitteln und folglich ohne Umweltverschmutzung, womit das Hauptziel des vorgeschlagenen Verfahrens erreicht wird. Weiterhin schließt das beschriebene Verfahren die Möglichkeit aus, daß die Schädlinge natürliche Abwehrmaßnahmen entwickeln, weil sich die Behandlung auf die Gesamtheit der in die Depressionskammer eingefüllten Produkte ausdehnt. Dies ist auch bei stark gehäuften Produkten (wie z. B. Samen verschiedener Größe) der Fall und ohne die Möglichkeit der Gewöhnung, wie es bei chemischen Substanzen der Fall ist, was bei den drastischen Änderungen der physischen Umgebung gar nicht möglich ist.

Das vorgeschlagene Verfahren eignet sich mit Varianten und Anpassungen der Phasen zur Behandlung aller Arten von Vegetabilien, die von tierischen Schädlingen betroffen werden, weil die Größe und das Volumenverhältnis der verschiedenen Teile, welche die beschriebene Anlage bilden, den jeweiligen Erfordernissen angepaßt werden kann. Dasselbe System kann in seiner Funktion zur Entseuchung von pflanzlichen Stoffen auch zur Entseuchung von Inertmaterialien verwendet werden, so z. B. um die in Bienenkörben und Bienenstöcken anwesenden Parasiten auszurotten, ohne daß dies aus dem Rahmen der Originalität und der Neuheit des zu schützenden Verfahrens fällt.

Die bisher beschriebene Methode kann auch vorteilhaft dazu verwendet werden, um die Wirkung der traditionellen Behandlungsart mit gasförmigen phytosanitarischen Produkten oder Insektiziden zu erhöhen, welche bei normaler Temperatur und bei normalem Druck flüssig oder fest sind, die aber in der Druckabfallphase durch Verdampfen, Sieden oder Sublimieren dampf- oder gasförmig werden. Werden gas- oder dampfförmige Insektizide verwendet, so dient die Luftleere in diesem Falle nur dazu, die angepeilten Parasiten besser zu erreichen, nicht aber, um Embolien hervorzurufen. Dabei ist es nicht notwendig, den Depressionsschock zu produzieren, wie in der Phase 3 beschrieben ist. Deshalb kommt auch die Nebenkammer C nicht zum Einsatz, da eine einzige Verbindung der Vakuumpumpe A mit dem Behälter B vollauf genügt.

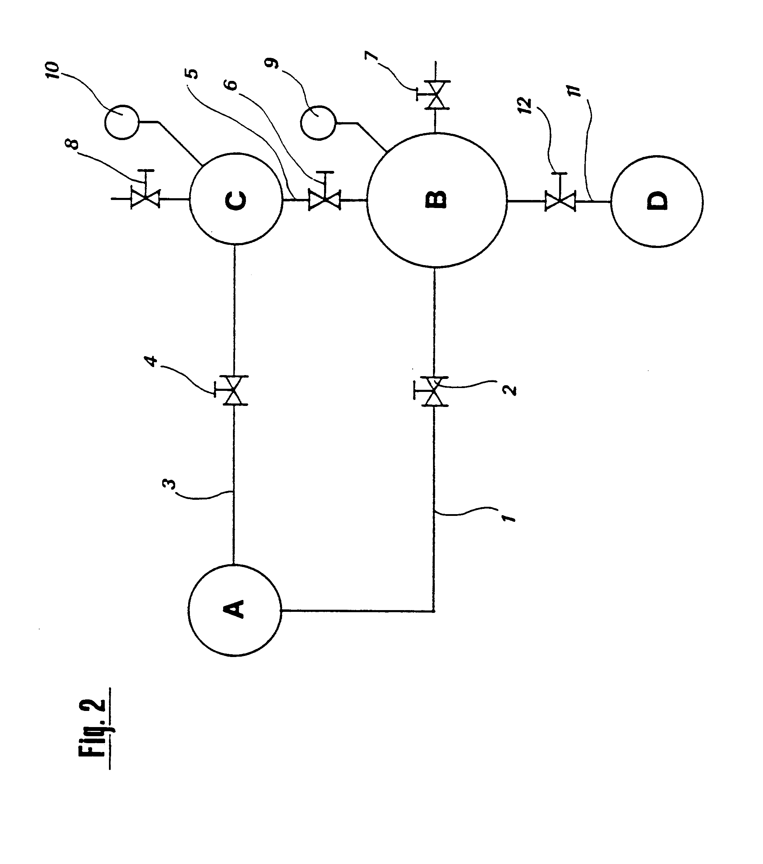

Die Fig. 2 der beiliegenden Zeichnung zeigt die Anordnung einer Anlage analog zu jener der Fig. 1, die sich an die Notwendigkeit anpaßt, die eingefüllten Vegetabilien mit phytosanitarischen Produkten zu behandeln. Gemäß diesem Schema besteht die Anlage aus einer Vakuumpumpe A, die durch die Leitung 1 mit dem Ventil 2 mit dem Hauptbehälter B verbunden ist. Der Behälter B ist weiterhin durch eine Leitung 11 mit einem Ventil 12 mit einem Behälter D verbunden, welcher das phytosanitarische Produkt beinhaltet, das zur Behandlung der Vegetabilien dient. Der Behälter B ist zusätzlich durch die mit Ventil 6 ausgerüstete Leitung 5 mit der Nebenkammer C verbunden, die durch die mit dem Ventil 4 versehene Leitung 3 mit der Vakuumpumpe A verbunden ist. Die Nebenkammer C und der Hauptbehälter B sind beide mit Vakuummetern 9 und 10 ausgerüstet, an denen man die Depressionswerte in den entsprechenden Behältern ablesen kann.

Mit der abgeänderten Anlage gemäß Fig. 2 kann die Behandlung der Vegetabilien mit Insektiziden nach einer Alternative zum bereits beschriebenen Verfahren durchgeführt werden, und zwar in der nachstehenden Phasenfolge:

- Phase 1: Alle Ventile mit Ausnahme von Ventil 2 werden geschlossen, dann wird die Vakuumpumpe solange in Betrieb gesetzt, bis im Behälter B das gewünschte Vakuum erreicht ist, was am Vakuummeter 9 abzulesen ist. Das zu behandelnde Gut ist logischerweise bereits in den Behälter B eingebracht worden.

- Phase 2: Das Ventil 2 wird geschlossen und die Vakuumpumpe A stillgelegt, dann öffnet man das Ventil 12, damit das gasförmige Insektizid eingeführt oder sonstwie durch die Depression im Behälter B transferiert werden kann. Nun wird das Ventil 12 wieder geschlossen und man läßt dem Insektizid Zeit, die Schädlinge zu beseitigen. Der Einsatz von Vakuum bewirkt eine Steigerung der Wirksamkeit des Gases, weil der mittlere freie Umlauf der Moleküle sich proportional zur erreichten Depression erhöht. Damit werden die Parasiten schneller vom Gas erreicht und es verbessert sich auch die Aufnahmefähigkeit ihrer Zellen. Die Schädlinge geraten dadurch in eine Umweltsituation, wo der Gasdruck nicht nur einem Teildruck, sondern fast dem Totaldruck entspricht, wie es in der Normalatmosphäre der Fall ist, und dies weil die osmosische Komponente des atmosphärischen Druckes fehlt.

- Phase 3: Nach erfolgter Behandlung öffnet man das Ventil 7, um die Gase oder die Dämpfe abzulassen und den normalen Druck wieder herzustellen, was die Herausnahme des behandelten Gutes ermöglicht, wie auch die Vorbereitungen für eine neue Behandlungsreihe. Falls die Schädlingsbekämpfungsgase wegen der enthaltenen Wirkstoffe die Umwelt belasten sollten, kann man sie in die Nebenkammer C entladen, indem man das Ventil 6 öffnet und sodann wieder schließt.

Damit aber die Restgase oder -dämpfe darin aufgenommen werden können, muß die Nebenkammer C ein höheres Vakuum aufweisen als jenes des Hauptbehälters B. Kommt die Nebenkammer C zum Einsatz, so wird darin ein zweckentsprechendes Vakuum erzeugt, indem man die Vakuumpumpe A bei geöffnetem Ventil 4 solange in Betrieb setzt, bis man die gewünschten Werte erreicht hat, die auf dem Vakuummeter 10 abgelesen werden können. Wenn das Vakuummeter 10 nach wiederholten Entleerungen des Hauptbehälters B ähnliche Werte zeigt, wie sie für denselben Behälter B programmiert sind, wird die Nebenkammer C ausgetauscht oder ihr Inhalt wird zwangsmäßig in den Ausgangsbehälter D zurückgeführt.

Alternativ ist es möglich, an die Leitung 5 eine Ansaugpumpe anzubauen, um die Restgase oder -dämpfe aus dem Hauptbehälter B abzusaugen und in die Nebenkammer C oder direkt in den Behälter D zu befördern. Außer den beiden bisher beschriebenen Verfahren ist es möglich, beide Systeme miteinander zu verbinden: Zuerst die Bildung des Depressionsschockes und die Steigerung des Vakuums im Hauptbehälter B für eine erste Entseuchung durch Embolien und dann eine nachfolgende Einführung von gezielten Insektiziden, nachdem die beschriebene Anlage zweckentsprechend angepaßt worden ist.

Mit entsprechenden Änderungen kann das oben beschriebene Verfahren auch für andere Notwendigkeiten eingesetzt werden, z. B. für die Bekämpfung des Holzwurmes in größeren Gegenständen aus Holz, für die Entseuchung einzelner eingewurzelter oder in Beeten angebauten Pflanzen, die von bestimmten Schädlingen angefallen worden sind. Für diesen Zweck wird das zu entseuchende Objekt mit einer gasdichten Hülle, einer Art von Plastikfilm, umhüllt. Die Hülle wird über die Pflanze gestülpt oder es wird mit ihr das ganze Beet bedeckt. Die Öffnung wird um den Stamm herum zusammengezogen und befestigt, falls es sich um einzelne Pflanzen handelt, oder rund um das Beet herum am Boden festgemacht, wenn es Beetkulturen sind. In beiden Fällen soll die Hülle so dicht wie möglich gemacht werden, wobei es jedoch nicht notwendig ist, sie ganz hermetisch abzuschließen, da man mit sehr begrenzten Depressionen arbeitet.

An die Plastikhülle wird ein Stutzen angebracht, der sie mit der Vakuumpumpe A verbindet. Wird die obige Methode angewandt, so übernimmt die Hülle die Funktion des Hauptbehälters B. Man geht dann so vor, wie es im Hauptverfahren beschrieben ist, auch wenn die in der Hülle erzeugte Depression sehr begrenzt sein wird. Die Hülle sollte dabei so eng wie möglich die Pflanzen umschließen oder am Kulturboden anliegen, man darf aber nicht so weit gehen, daß man die Objekte beschädigt.

In der nächsten Phase wird das geeignetste Gas eingeführt, z. B. Ammoniak oder andere für die Umwelt und die Menschen unschädliche Gase. Um darin Überdrücke zu vermeiden, hört man mit dem Einpumpen der Gase auf, sobald die Hülle ihre normalen Ausmaße erreicht hat, sonst könnte die Hülle reißen oder die Gase könnten in die Umwelt entweichen. Sodann läßt man genügend Zeit verstreichen, bis das Gas seine entseuchende Wirkung getan hat, dann öffnet man die Hülle, um das Gas entweichen zu lassen und um die Objekte freizulegen.

Die vorbeschriebenen Entseuchungszyklen, sei es für das Grundverfahren, sei es für den Einsatz von herkömmlichen Insektiziden mit Erzeugung von Vakuum, können von Hand gesteuert oder mit einer zweckentsprechenden Schaltanlage automatisiert werden, an welche die Vakuumpumpe, die Vakuummeter und die Ventile angeschlossen sind. Die Variation in der Reihenfolge der Phasen und Zyklen, die Eigenschaften der Pumpe, die Form und die Größe der Vakuumkammern sowie die Besonderheiten der Schaltanlage für die eventuelle Automatisierung, die Behandlungsfolgen sowie die zweckentsprechenden Anpassungen der Anlage sind in jedem Falle in der Originalität des zu schützenden Verfahrens inbegriffen.

Bezugszeichenaufstellung

| A | Vakuumpumpe |
|---|---|
| B | Vakuumhauptbehälter |
| C | Nebenkammer |
| B 1 | Tür |
| D | Behälter |
| 1 | Leitung |
| 2 | Ventil |
| 3 | Leitung |
| 4 | Ventil |
| 5 | Leitung |
| 6 | Ventil |

| 7 | Ablaßventil |
| 8 | Ablaßventil |
| 9 | Vakuummeter |
| 10 | Vakuummeter |
| 11 | Leitung |
| 12 | Ventil |

**Patentansprüche**

1. Verfahren für die Befreiung (Entseuchung) pflanzlicher oder anderer Stoffe von tierischen Schädlingen, dadurch gekennzeichnet, daß die zu behandelnden Produkte in einen Vakuumbehälter eingefüllt werden und entsprechend dem Dekompressionswert der Spannung von gesättigtem Wasserdampf bei Umwelttemperatur eine schnelle Dekompression erzeugt wird, wodurch für die biologischen Strukturen ein kritisches Spannungsfeld entsteht und infolge des höheren Widerstandsgrades der pflanzlichen Organe gegenüber denen der tierischen Vorgänge eingeleitet und vervollständigt werden, die in den Schädlingen durch die Entwicklung von in den organischen Zellflüssigkeiten aufgelösten Gasen Embolien entstehen lassen.

2. Verfahren nach Anspruch 1, dadurch gekennzeichnet, daß das Einfüllen der Produkte in den Vakuumbehälter bei normalem Druck erfolgt und darauf das Vakuum entsprechend den vorgesehenen Werten erzeugt wird.

3. Verfahren nach Anspruch 1 und 2, dadurch gekennzeichnet, daß ein schlagartiger Druckabfall auf einen kritischen Wert der Dekompression erfolgt und in den Zellen der tierischen Schädlinge eine ebullioskopische Werterhöhung erzeugt wird.

4. Verfahren nach Anspruch 1 bis 3, dadurch gekennzeichnet, daß der kritische Dekompressionswert während der für das Entstehen der Embolie in den Zellen der tierischen Schädlinge benötigten Zeit aufrechterhalten wird.

5. Anlage zur Durchführung des Verfahrens nach einem der Ansprüche 1 bis 4, dadurch gekennzeichnet, daß eine Vakuumpumpe (A) über eine Leitung (1) mit Steuerventil (2) mit einem Vakuum-Hauptbehälter (B) und über eine Leitung (3) mit Steuerventil (4) mit einer Nebenkammer (C) verbunden ist, wobei zwischen Hauptbehälter (B), der mit einer luftdichten Tür (B1) versehen ist, und Nebenkammer (C) eine Verbindungsleitung (5) und ein Steuerventil (6) angeordnet sind sowie die Hauptbehälter (B) und die Nebenkammer (C) Ablaßventile (1 und 8) und Vakuummeter (9 und 10) aufweisen.

6. Anlage nach Anspruch 5, dadurch gekennzeichnet, daß der Hauptbehälter (B) über eine Leitung (11) mit Steuerventil (12) mit einem weiteren Behälter (D) verbunden ist.

7. Verfahren nach Anspruch 1, dadurch gekennzeichnet, daß das Vakuumsystem zusätzlich für eine bessere Verteilung herkömmlicher Insektizide im gas- oder dampfförmigen Zustand durch Verdampfen, Sieden oder Sublimieren verwendet wird.

8. Verfahren nach Anspruch 1, dadurch gekennzeichnet, daß das Vakuumsystem zur Erzeugung von Embolien mit dem Einsatz von Vakuum zur besseren Verteilung herkömmlicher gas- oder dampfförmiger Insektizide kombiniert wird.

Fig.1

EP 0 474 324 A1

Fig. 2

EP 0 474 324 A1

**Europäisches Patentamt**

**EUROPÄISCHER RECHERCHENBERICHT**

Nummer der Anmeldung

**EP 91 25 0235**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 445 990 (A. NATTERMANN & CIE. GMBH) <br> * Seite 6, Zeile 17 - Zeile 22; Abbildung 1 * * <br> – – – | 1-4,7,8 | A 01 M 17/00 |
| A | DE-A-2 602 034 (AGEFKO KOHLENSÄURE-INDUSTRIE GMBH) <br> * Seite 4, Zeile 8 - Zeile 11; Abbildung 1 * * <br> – – – | 3 | |
| A | BE-A-542 239 (E.F.M.GH. FURDELLE) <br> – – – | | |
| A | FR-A-527 369 (A. LENORMAND) <br> – – – – – | | |

**RECHERCHIERTE SACHGEBIETE (Int. Cl.5)**

A 01 M

Der vorliegende Recherchenbericht wurde für alle Patentansprüche erstellt

| Recherchenort | Abschlußdatum der Recherche | Prüfer |
|---|---|---|
| Den Haag | 05 Dezember 91 | MARANGONI G. |

**KATEGORIE DER GENANNTEN DOKUMENTE**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
------------------------------------------------------
& : Mitglied der gleichen Patentfamilie, übereinstimmendes Dokument